# EUROPEAN PATENT SPECIFICATION

(11) **EP 1 167 185 B1**
(45) Date of publication and mention of the grant of the patent: **25.02.2004**
(21) Application number: 01202405.5
(22) Date of filing: 21.06.2001
(51) Int. Cl.: B64D 29/00, F02K 1/82, F02C 7/045

(54) **Sound-absorbing and reinforcing structure for engine nacelle acoustic panel**
Schalldämmende und verstärkende Struktur für Akustikplatten einer Triebwerksgondel
Structure d'absorption acoustique et de renforcement pour des panneaux acoustiques d'une nacelle de réacteur

(30) Priority: 28.06.2000 IT MI201451
(43) Date of publication of application: 02.01.2002
(73) Proprietor: Aermacchi S.p.A., 21040 Venegono Superiore (Varese) (IT)
(72) Inventor: Battini, Massimo, 21100 Varese (IT); Pievani, Sergio, 21040 Venegono Superiore (Varese) (IT); Pedetti, Camillo, 21100 Varese (IT)
(74) Representative: Fusina, Gerolamo

(56) References cited:
- EP-A- 0 572 725
- EP-A- 0 895 222
- WO-A-91/01034
- GB-A- 1 543 312
- US-A- 5 175 401

## Description

The present invention relates to a sound-absorbing structure for a jet engine nacelle comprising at least one acoustic panel, and designed to contain the engines of jet airplanes.

A structure according to the preamble of claim 1 is known from WO-A-91 01034 or EP-A-0 572 725.

Each nacelle of a jet engine comprises a front portion set in a position corresponding to the inlet cone, the said front portion being structured in such a way as to ensure the best possible reduction of the acoustic emission produced by the engine.

In effect, the engines of jet airplanes are the cause, during their operation, of numerous sources of noise, which generate sound waves in various directions. A first source is represented by the internal noise, which is generated by the combustion and expansion of hot gases that traverse the turbine. A second source is represented by the reaction noise that is generated in the area where a mixture of gas and air flows and where the turbulence is maximum on account of the substantial difference in speed and temperature between the flows of the moving mixtures.

Another source of noise is the one due to the intermediate-pressure compressor present inside the nacelle. Finally, a further source of noise results from the operation of the fan of the jet engine.

The various relevant legal requirements and regulations which impose increasing reduction of noise levels in the vicinity of airports have given rise to an extreme interest in the progressive reduction of the noise produced by airplanes, with the provision of special acoustic shielding.

One method is that of using, in an area corresponding to the internal portion of the nacelle, on the side of the inlet cone, a series of layers of covering made of absorbent, porous material or sound-absorbing coating materials in which a series of Helmholtz resonators are made.

Alternatively, acoustic panels are employed that are able to attenuate the noise thanks to the adoption of peculiar constructional technologies that use both metallic materials and composite materials.

In the design of the inlet cone of a nacelle for reaction engines, the installation of absorbent structures thus involves an extremely sophisticated technology which combines the characteristics of adequate attenuation of the various noises generated with the characteristics for a general reduction of extension of all the mechanical parts that do not contribute to attenuation of the noise (the so-called "non-acoustic" parts), with the characteristics of extreme lightness, and, at the same time, considerable sturdiness and reliability of all the aircraft structures. Generally, structures of a traditional type do not take into account all these requirements, which, among other things, are in some cases even in contradiction with one another.

A purpose of the present invention is thus to provide a sound-absorbing and reinforcement structure for engine nacelle acoustic panel which will overcome the problems referred to above, i.e., to provide a reinforcement structure that will be able to attenuate as much as possible the noise coming from an engine nacelle of a jet airplane, reducing to the minimum the extension of the parts which do not contribute to attenuation of the noise, and at the same time that will guarantee the structural continuity of the entire acoustic panel.

Another purpose of the present invention is to provide a sound-absorbing and reinforcing structure for engine nacelle acoustic panel that will enable removal of the individual panel, meeting the requirements of maintainability, maximizing the effective geometrical area of the panels, ensuring respect of the streamlining in the assembly stage, and preventing any interaction with external atmospheric agents.

Not the least important purpose of the invention is that of providing a sound-absorbing and reinforcing structure for engine nacelle acoustic panels that is easy and economical to build and does not involve the use of complex or particularly costly technologies by virtue of the advantages achieved.

These and other purposes are attained by a sound-absorbing and reinforcement structure for engine nacelle acoustic panel according to Claim 1.

Advantageously, the present invention makes it possible to simplify the construction and assembly of the insulating coating materials of the type described previously and to improve their behaviour in use from the standpoint of lightness, strength and reliability of the aircraft, the production and running costs and of the sound-absorbing properties of all those portions of the acoustic panels that contribute to attenuating noise during flight.

Further purposes and advantages of the present invention will emerge clearly from the ensuing description and the annexed drawings, which are provided purely by way of explanatory but non-limiting example, and in which:

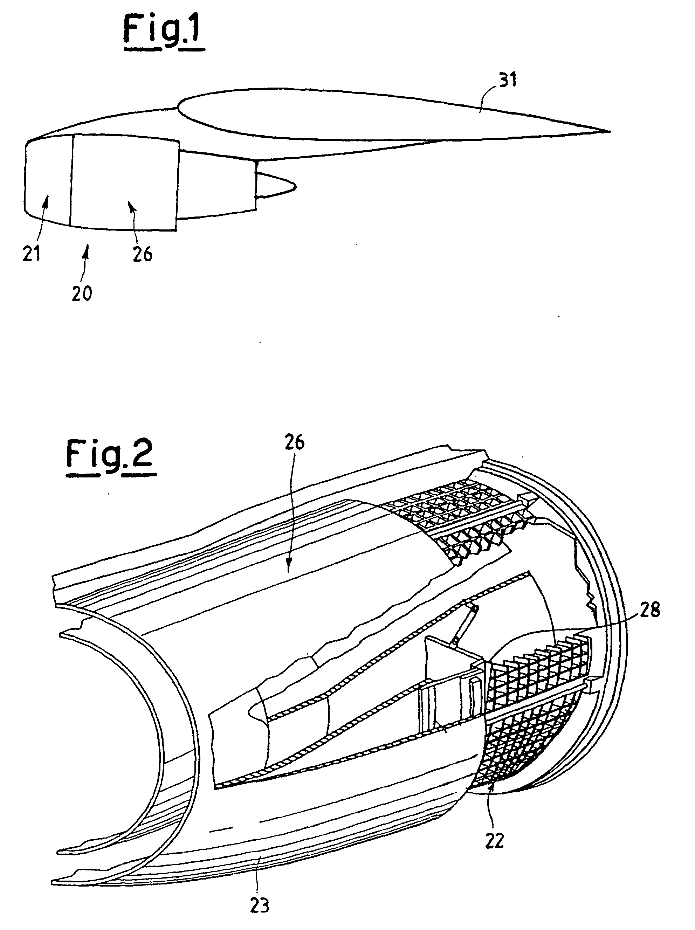

- Figure 1 is a partial view of a nacelle, designed to contain a jet engine comprising a sound-absorbing and reinforcing structure according to the present invention;
- Figure 2 is a fragmentary perspective partially cut-away pictorial view of the front portion, corresponding to an inlet cone of the nacelle appearing in Figure 1, according to the invention;
- Figure 3A is a schematic perspective view showing the jointing of two engine nacelle acoustic panels, which are shaped according to the geometry of the inlet cone of the nacelle and are jointed together; and
- Figure 3B is an enlarged and partial view of a sound-absorbing and reinforcing structure for acoustic panels of a nacelle, provided in an area corresponding to the longitudinal jointing elements of the panels according to the invention.

With reference to the above figures, the number 20 designates a nacelle, designed to contain a jet engine for a jet aircraft, which is generally mounted on a support underneath the wing 31 of an aircraft.

The nacelle 20 includes a thrust-reversing device, comprising a sleeve 21 which translates backwards and forwards, so as to cover and uncover, alternately, cascaded structures 22, designed for reversing thrust.

In an aircraft, the thrust-reversing device is mounted on the nacelle 20 and is positioned at the front, with respect to the location of the jet engine, which is inside the nacelle 20, whilst the cascaded structures 22 are spaced out on the circumference inside the nacelle 20.

Whilst the aircraft is in flight, the translating sleeve 21 is in a position where the cascaded structures 22 are enclosed. In order to set the aircraft in a condition for landing, the sleeve 21 is displaced from the closing position to a retracted position by means of actuator devices 28. This arrangement enables the exhaust gases to flow onto the cascaded structures 22 so as to slow the aircraft down during descent for landing.

The translating sleeve 21 is generally made up of one or more metal outer semi-cylindrical panels 23 and one or more inner semi-cylindrical acoustic panels 24 built, according to a sandwich structure, of both a metal material and a composite material, which are connected to the panels 23 in an area corresponding to the portion 26 of the nacelle 20.

The outer metal layers 23 and the inner acoustic panels 24 are joined together in a rear area and diverge with respect to one another towards the portion 26, so as to identify a chamber designed to contain the cascaded structures 22 and the associated supports.

Traditionally, in order to form an acoustic panel 24 a sandwich structure is used.

In particular, the acoustic panel 24 has an inner layer 32, which is perforated and is made of a composite material, an outer layer 34, which is not perforated and is also made of composite material, and an intermediate layer 36, which is made of a honeycomb structure and is pressed between the two aforementioned layers 32, 34.

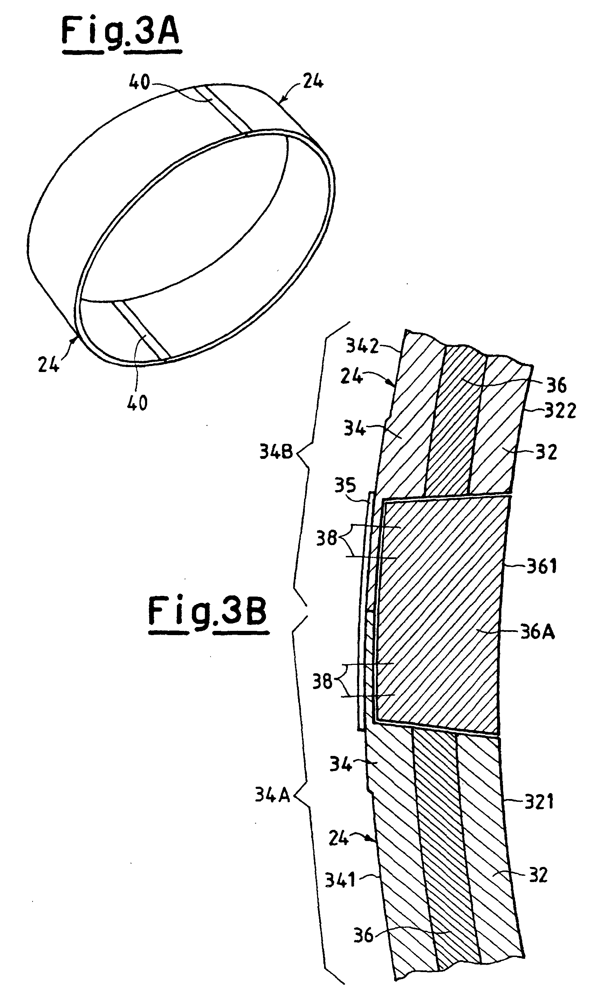

The acoustic panels 24 are then treated so as to constitute a single ring-shaped curvilinear structure such as the one illustrated in Figure 3A, which is then jointed longitudinally in two or more points.

In particular, Figure 3A shows two acoustic panels 24, jointed at the reference points 40 so as to constitute a curvilinear structure.

The longitudinal jointing elements 40 may present various constructional solutions; however, the aim of the one represented in enlarged detail in Figure 3B is to extend the acoustic region to the majority of the element 40, guaranteeing structural continuity, enabling the individual panel 24 to be removed, i.e., meeting the requirements of maintainability, ensuring respect of the requirements of aerodynamic contouring in the assembly stage and preventing any interaction with external atmospheric agents.

In detail, the constructional solution outlined above envisages proceeding in such a way that, regardless of the number of panels 24 used, the portions 34A, 34B of each panel 24 are connected to a metal butt strap 35 by means of a series of rivets or fasteners 38, ensuring the continuity of fan flow along the layers 341, 342 (backskin) of the respective portions 34A, 34B, that are without acoustic treatment.

The portion 36A, consisting of a honeycomb structure, is acoustically treated in order to contribute to the attenuation of noise and is held in a position adjacent to the butt strap 35, as represented in Figure 3B, thanks to the action of the said connection members 38, so as to contribute to the strength of the jointing elements 40 and of the entire structure, which, as a result, presents a considerable compactness and is not particularly affected by mechanical stresses.

In addition, the layers 321, 322 of the respective portions 34A, 34B undergo acoustic treatment, and likewise the layer 361 of the portion 36A, in order to improve the mechanical characteristics further.

Finally, it is to be emphasized that a structure made like the one represented in Figure 3B, which is envisaged at the longitudinal joints between acoustic panels 24, makes it possible to obtain a better insulation from noise and improved mechanical properties. Furthermore, in this way each panel 24 can be removed and replaced individually and easily.

In particular, the presence is important of the metal layer 35, which is used as butt strap of the structure, and of the connecting members 38, which make it possible to withhold the butt strap 35 in position with respect to the portions 34A, 34B of the panel 24, and which enable the honeycomb portion 36A to be kept in place.

In addition, in the proximity of the jointing elements 40, as is clearly visible from Figure 3B, it is envisaged to position a honeycomb portion 36A, which overlaps at least partially the layers 32, 34, 36 of the panel 24, and has a width approximately equal to that of the jointing element 40 and a longitudinal dimension slightly smaller than the thickness of the panel 24. Finally, the portion 36A, in a preferred, but non-limiting, example of embodiment, has an approximately trapezoidal shape.

From the foregoing description the characteristics and advantages of the sound-absorbing and reinforcing structure for acoustic panels of nacelles, which forms the subject of the present invention emerge clearly.

It is evident that numerous variations may be made to the said sound-absorbing and reinforcing structure for acoustic panels of nacelles, which forms the subject of the present invention, without thereby departing from the scope of the claims, as likewise it is clear that, in the practical embodiment of the invention, the materials, shapes, and dimensions of the details illustrated may be any whatsoever according to the particular requirements.

## Claims

1. A sound-absorbing structure for being provided in a front portion and in the region of an inlet cone of a jet engine nacelle (20) for jet aircraft and being designed to ensure an attenuation of the acoustic emission of said engines, comprising at least one acoustic panel (24), which is made up of a series of layers (32, 34, 36) laid on top of one another, made of metal or composite material, said sound-absorbing and structure being **characterized by** a reinforcing structure in the vicinity of a longitudinal joint (40) of two panel edge portions of, comprising at least two first portions (34A, 34B) of a first layer (34), of at least one panel (24) which are connected on one side to a covering element (35) of each longitudinal joint (40) by means of a series of connecting members (38), thus ensuring continuity of fan flow along (341, 342) said first layer and at least one second portion (36A), which is acoustically treated and is overlaid on a second side of said first two portions (34A, 34B) of the first layer (34) in a groove formed in said layers, and which is kept in place by means of said connecting members (38), in such a way as to strengthen said longitudinal joint (40).

2. A sound-absorbing and reinforcing structure according to Claim 1, **characterized in that** at least one first layer (321, 322) adjacent to said covering element (35) is acoustically treated.

3. A sound-absorbing and reinforcing structure according to Claim 1, **characterized in that** at least one second layer (361) of said second portion (36A) is acoustically treated.

4. A sound-absorbing and reinforcing structure according to Claim 1, **characterized in that** said acoustic panel (24) is designed so as to maximize the effective geometrical area, and so as to minimize the extension of said longitudinal jointing elements (40) and of all the non-acoustic parts that do not contribute to attenuation of noise.

5. A sound-absorbing and reinforcing structure according to Claim 1, **characterized in that** an acoustic region is extended to the majority of each of said longitudinal jointing elements (40), guaranteeing their structural continuity so as to enable removability of each panel (24) and to meet the requirements of maintainability, ensuring respect of streamlining in an assembly stage, and preventing any interaction with external atmospheric agents.

6. A sound-absorbing and reinforcing structure according to Claim 1, **characterized in that** said first, outer, layer (34) of the acoustic panel (24) is made of composite material and is not perforated, said second, inner, layer (32) being made of composite material and being perforated, and said third, intermediate, layer (36) having a honeycomb structure and being pressed between said first outer layer (34) and said second inner layer (32).

7. A sound-absorbing and reinforcing structure according to Claim 1, **characterized in that** said connecting members (38) comprise rivets or fasteners.

8. A sound-absorbing and reinforcing structure according to Claim 1, **characterized in that** said second portion (36A) has a honeycomb structure.

## Patentansprüche

1. Schalldämmende Struktur zur Bereitstellung in einem Vorderteil und im Bereich einer Einlassdüse einer Triebwerksgondel (20) für Jetflugzeuge, die konstruiert ist, um eine Dämpfung der akustischen Emission der genannten Triebwerke sicherzustellen, die zumindest eine akustische Platte (24) aufweist, die aus einer Folge von übereinandergelegten Schichten (32, 34, 36) besteht, die aus Metall oder Verbundwerkstoff hergestellt sind, wobei die schalldämmende Struktur **gekennzeichnet ist durch** eine verstärkende Struktur in der Nähe einer Längsverbindung (40) von zwei Plattenkantenteilen, die mindestens zwei erste Teile (34A, 34B) einer ersten Schicht (34) von wenigstens einer Platte (24) aufweisen, die an einer Seite mit einem Abdeckelement (35) jeder Längsverbindung (40) mittels einer Reihe von Verbindungsteilen (38) verbunden sind, wodurch sie die Kontinuität des Lüfterflusses entlang (341, 342) genannter ersten Schicht und wenigstens einem zweiten Teil (36A) gewährleisten, das akustisch behandelt ist und auf eine zweite Seite der genannten ersten beiden Teile (34A, 34B) der ersten Schicht (34) in einer in den genannten Schichten gebildeten Fuge übereinandergelegt ist, und die mittels der genannten Verbindungsteile (38) in einer solchen Art und Weise, um die genannte Längsverbindung (40) zu stärken, festgehalten werden.

2. Schalldämmende und verstärkende Struktur gemäß Anspruch 1, **dadurch gekennzeichnet, dass** zumindest eine erste, dem genannten Abdeckelement (35) benachbarte erste Schicht (321, 322) akustisch behandelt ist.

3. Schalldämmende und verstärkende Struktur gemäß Anspruch 1, **dadurch gekennzeichnet, dass** zumindest eine zweite Schicht (361) des genannten zweiten Teils (36A) akustisch behandelt ist.

4. Schalldämmende und verstärkende Struktur gemäß Anspruch 1, **dadurch gekennzeichnet, dass** die genannte akustische Platte (24) konstruiert ist, um die effektive geometrische Fläche zu maximieren und um die Ausdehnung der genannten Längsverbindungselemente (40) und aller nicht-akustischen Teile, welche nicht zur Geräuschdämpfung beitragen, zu minimieren.

5. Schalldämmende und verstärkende Struktur gemäß Anspruch 1, **dadurch gekennzeichnet, dass** sich ein akustischer Bereich auf die Mehrheit jedes der genannten Längsverbindungselemente (40) erstreckt, was ihre strukturelle Kontinuität gewährleistet, um die Abnehmbarkeit jeder Platte (24) zu gestatten und die Anforderungen an die Instandhaltbarkeit zu erfüllen, wobei die Rationalisierung in einer Zusammenbauphase geachtet wird und jede Wechselwirkung mit äußeren atmosphärischen Mittel verhindert wird.

6. Schalldämmende und verstärkende Struktur gemäß Anspruch 1, **dadurch gekennzeichnet, dass** die genannte erste äußere Schicht (34) der akustischen Platte (24) aus Verbundwerkstoff hergestellt und nicht perforiert ist, wobei die genannte zweite innere Schicht (32) aus Verbundwerkstoff hergestellt und perforiert ist, und die genannte dritte Zwischenschicht (36) eine Honigwaben-Struktur hat und zwischen die genannte erste äußere Schicht (34) und die genannte zweite innere Schicht (32) gepresst ist.

7. Schalldämmende und verstärkende Struktur gemäß Anspruch 1, **dadurch gekennzeichnet, dass** die genannten Verbindungsteile (38) Nieten oder Halterungen aufweisen.

8. Schalldämmende und verstärkende Struktur gemäß Anspruch 1, **dadurch gekennzeichnet, dass** das genannte zweite Teil (36A) eine Honigwaben-Struktur hat.

## Revendications

1. Structure d'absorption acoustique destinée à être placée dans une partie avant et dans la région d'un cône d'entrée d'une nacelle (20) de réacteur pour avion à réaction et conçue pour assurer une atténuation de l'émission acoustique desdits réacteurs, comprenant au moins un panneau acoustique (24), qui est constitué d'une série de couches (32, 34, 36) posées les unes sur les autres, en métal ou en matériau composite, ladite structure d'absorption acoustique étant **caractérisée par** une structure de renforcement au voisinage d'un joint longitudinal (40) de deux parties de bord de panneau, comprenant au moins deux premières parties (34A, 34B) d'une première couche (34) d'au moins un panneau (24) qui sont connectées sur un côté à un élément de couverture (35) de chaque joint longitudinal (40) au moyen d'une série d'éléments de connexion (38), assurant ainsi la continuité du flux de soufflante le long (341, 342) de ladite première couche et d'au moins une deuxième partie (36A), qui est traitée acoustiquement et qui recouvre un deuxième côté desdites deux premières parties (34A, 34B) de la première couche (34) dans une rainure formée dans lesdites couches et qui est maintenue en place au moyen desdits éléments de connexion (38), de manière à renforcer ledit joint longitudinal (40).

2. Structure d'absorption acoustique et de renforcement selon la revendication 1, **caractérisée en ce que** au moins une première couche (321, 322) adjacente audit élément de couverture (35) est traitée acoustiquement.

3. Structure d'absorption acoustique et de renforcement selon la revendication 1, **caractérisée en ce que** au moins une deuxième couche (361) de ladite deuxième partie (36A) est traitée acoustiquement.

4. Structure d'absorption acoustique et de renforcement selon la revendication 1, **caractérisée en ce que** ledit panneau acoustique (24) est conçu pour maximiser l'aire géométrique efficace, et pour minimiser l'étendue desdits éléments de jonction longitudinaux (40) et de toutes les pièces non acoustiques qui ne contribuent pas à l'atténuation du bruit.

5. Structure d'absorption acoustique et de renforcement selon la revendication 1, **caractérisée en ce qu'**une région acoustique est étendue jusqu'à la majorité de chacun desdits éléments de jonction longitudinaux (40), en garantissant leur continuité structurelle afin de permettre le démontage de chaque panneau (24) et de répondre aux exigences de maintenance, en assurant le respect du profilage dans une étape d'assemblage, et en empêchant toute interaction avec des agents atmosphériques extérieurs.

6. Structure d'absorption acoustique et de renforcement selon la revendication 1, **caractérisée en ce que** ladite première couche (34) extérieure du panneau acoustique (24) est en matériau composite et n'est pas perforée, ladite deuxième couche (32) intérieure étant en matériau composite et étant perforée, et ladite troisième couche (36) intermédiaire ayant une structure en nid d'abeilles et étant pressée entre ladite première couche (34) extérieure et ladite deuxième couche (32) intérieure.

7. Structure d'absorption acoustique et de renforcement selon la revendication 1, **caractérisée en ce que** lesdits éléments de connexion (38) comprennent des rivets ou des dispositifs de fixation.

8. Structure d'absorption acoustique et de renforcement selon la revendication 1, **caractérisée en ce que** ladite deuxième partie (36A) a une structure en nid d'abeilles.
